# EUROPEAN PATENT SPECIFICATION

(11) **EP 0 468 588 B1**
(45) Date of publication and mention of the grant of the patent: **01.06.1994**
(21) Application number: 91201927.0
(22) Date of filing: 23.07.1991
(51) Int. Cl.: A01J 7/00, A01J 5/04

(54) **An implement for automatically milking an animal**
Gerät zum automatischen Melken von Tieren
Dispositif de traite automatique d'animaux

(30) Priority: 25.07.1990 NL 9001689
(43) Date of publication of application: 29.01.1992
(73) Proprietor: MAASLAND N.V., 3155 PD Maasland (NL)
(72) Inventor: van den Berg, Karel, NL-2971 BR Bleskensgraaf (NL); Bom, Cornelis Johannes Gerardus, NL-3181 VC Rozenburg (NL); Fransen, René, NL-3135 ZD Vlaardingen (NL)
(74) Representative: Mulder, Herman

(56) References cited:
- EP-A- 0 054 915
- EP-A- 0 270 165
- WO-A-81/01612
- DE-A- 3 218 005
- FR-A- 2 309 134
- GB-A- 2 055 543
- US-A- 3 874 337
- US-A- 4 838 207

## Description

The present invention relates to an implement for automatically milking an animal, such as a cow, which implement comprises a milking plant including teat cups and a robot arm by means of which the teat cups are automatically connectable to the teats of the animal's udder as well as a milk measuring device comprising at least one milk meter, via which milk measuring device the milk coming from the teat cups can be conveyed into a milk tank.

In the automatic connecting of the teat cups to the teats of an animal's udder by means of a robot arm there may occur the problem that a teat cup is connected to a teat which is folded in the process, as a result of which, although a vacuum required for milking can be generated in the teat cup, the actual milking cannot be effected; the teat cup is sucked tightly against a teat of the animal's udder. However, no milk can pass through the teat. This phenomenon will be called "blind milking".

In order to solve the resulting problems, the above-defined implement, in accordance with the invention, is provided with a sensor which could be e.g. a mastitis sensor, a temperature sensor, a flow sensor, a milk meter or any other sensor, by means of which sensor, after a teat cup has been brought to a teat of the animal's udder and a vacuum has been produced in the teat cup inner space, a signal is generated indicative for the occurence of "blind milking", i.e. the folding of a teat during the connection of a teat cup to said teat, which signal in the case of blind milking effects that the relevant teat cup is automatically decoupled and, by means of said robot arm, connected again.

Although in determining the location of the sensor it should be taken into account that it is desirable to have same arranged as closely as possible to the connection of the teat cups to the teats, resulting in a quick establishment of the "blind milking", the sensor according to the invention may be arranged inside or at the outer surface of a teat cup, inside a milk meter, or be incorporated in the line between a teat cup and the milk measuring device. In this connection, each teat cup may be connected to a separate milk meter, although, of course, also a milk measuring device consisting of four independent milk meters may be present.

The above-mentioned sensors respond to the presence and absence of milk. Preferably they do this when the milking process of the robot has actually been started or when an attempt has been made to that effect. However, it may be advantageous to establish "blind milking" already in an earlier stage, because the robot arm by means of which the teat cups are being connected to the teats then still being in the proper position below the animal's udder, the relevant teat cup can easily be decoupled and connected again. In accordance with another aspect of the invention, this is ensured when the signal supplied by the sensor is generated immediately after a vacuum has been produced in the teat cup. In particular, the sensor may respond to the quantity of air or fluid which, by means of the pulsator system employed in the milking operation, is introduced into the teat cup. In case of "blind milking" this vacuum will be higher than in the case of a proper connection of the teat to the teat cup. For a better understanding of the invention and to show how the same may be carried into effect, reference will now be made, by way of example, to the accompanying drawings, in which:
Figure 1 shows schematically an arrangement of a milking plant in accordance with the invention, and
Figure 2 shows a teat cup comprising a sensor for establishing "blind milking".

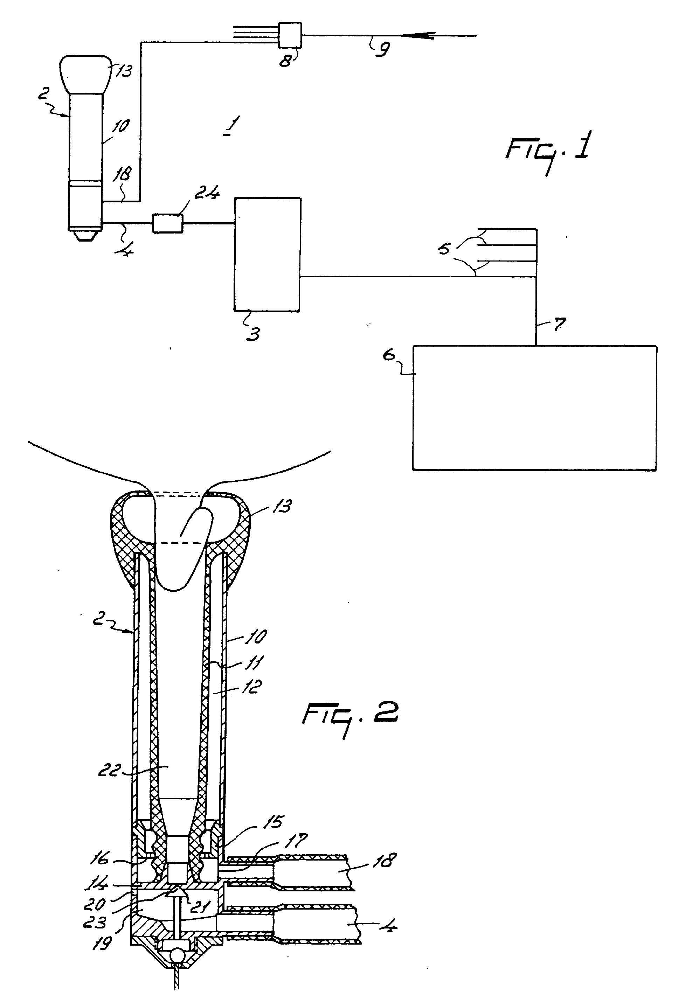

Figure 1 shows a schematic arrangement of a milking plant 1 for an implement for automatically milking an animal, only one teat cup 2 and only one milk meter 3 having been shown in this arrangement for the sake of simplicity. The milk obtained from each udder quarter with the aid of the teat cups 2 can be conveyed through a separate line 4 to a milk measuring device which comprises four milk meters 3. The individual discharge lines 5 of the milk meters 3 are coupled to a common discharge line 7 which terminates in the milk tank 6. A more detailed basic arrangement of the milking plant has been shown and described in European patent application no. 90200422.5 filed on 23.02.1990. The milking plant furthermore comprises, insofar as of relevance to the present invention, a pulsator system 8 for the four teat cups 2. As has been described more in detail in the said European patent application, the vacuum line 9 for the pulsator system 8 is connected to a vacuum pump having a vacuum balance tank.

Figure 2 shows a longitudinal cross-sectional view of a teat cup 2; this teat cup in a customary manner consists of a solid, e.g. metal, sleeve 10, an inner wall 11 made of a flexible material, e.g. rubber, enclosed thereby, and a rubber cap 13 which seals the space 12 between the sleeve 10 and the inner wall 11 at the upper side. At the lower side, the space between the sleeve 10 and the inner wall 11 is sealed by a sealing ring 14, while at some distance thereabove there is provided between the sleeve 10 and the inner wall 11 a ring 15 having an aperture 16. Between the sealing ring 14 and the ring 15 there is located a space, in which the pulsator system 8 produces through the line 18 and via an aperture 17 a pulsating vacuum, thereby effecting in the space between the sleeve 10 and the inner wall 11 a pulsating vacuum which causes the inner wall 11 to close firmly around the teat, when the teat cup is connected thereto correctly, or causes the inner wall 11 to move outwards again, whereby is obtained the rhythmic movement around the teat as required for the milking operation to be performed. In order to function as a buffer for the milk to be collected and to minimize the fluctuations in the vacuum under the teat, there is provided in the lower part of the teat cup a buffer space 19, in which a relatively narrow air suction aperture 20 is made for the milk transport. The milk line 4, intended for the discharge of the milk to the milk meter 3, is connected to this buffer space 19. In addition, the buffer space 19 contains a fixed element 21, which element partly projects into the aperture between the teat space 22 and the buffer space 19 to ensure that the milk flows gradually into the buffer space 19 and a splitting of the milk is prevented. At the upper end of the fixed element 21 a sensor 23 can be provided to perform a temperature measurement. The temperature of the milk, as can be established in this manner already in the teat cup 2, is a proper measure for the body temperature; the latter temperature is higher than normal with sick cows, e.g. those affected by mastitis. When the teat of the animal's udder is not connected properly but e.g. is folded double as shown in Figure 2, in the same manner as when the teat would have been surrounded correctly by the inner space 2 there is generated thereinside through the milk line 4 a vacuum and the milking procedure is started. Due to the absence of a milk flow, the sensor 23 establishes a lower or higher temperature than normal, it being at least assumed that the ambient temperature around the teat cup, and hence the temperature of the teat cup itself, is lower, respectively higher, than the body temperature of the animal to be milked. In this embodiment of the teat cup, the sensor 23 is suitable for establishing both mastitis and "blind milking". Instead of this sensor 23, a sensor 24 having the same action may be arranged in the milk line 4, while a similar sensor might furthermore be arranged yet in the milk meter 3. The two functions, i.e. the establishment of mastitis and that of "blind milking", may also be separated. For example, it is possible to use the sensor 23 for establishing mastitis and the sensor 24 for establishing "blind milking", or vice versa. The sensors 23 and 24 need not be based on the establishment of changes in temperature; they may also be designed as milk conductivity sensors.

The signal supplied by the sensors, by means of which mastitis or "blind milking" is established, can also be used for decoupling and connecting again the relevant teat cup, use being made, of course, again of the robot arm, by means of which the teat cups had been connected automatically to the teats.

## Claims

1. An implement for automatically milking an animal, such as a cow, which implement comprises a milking plant (1) including teat cups (2) and a robot arm by means of which the teat cups are automatically connectable to the teats of the animal's udder as well as a milk measuring device comprising at least one milk meter (3), via which milk measuring device the milk coming from the teat cups (2) can be conveyed into a milk tank (6), characterized in that there is provided a sensor (23, 24) which could be e.g. a mastitis sensor, a temperature sensor, a flow sensor, a milk meter or any other sensor, by means of which sensor, after a teat cup (2) has been brought to a teat of the animal's udder and a vacuum has been produced in the teat cup inner space, a signal is generated indicative for the occurrence of "blind milking", i.e. the folding of a teat during automatic connection of a teat cup to said teat, which signal in the case of blind milking effects that the relevant teat cup (2) is automatically decoupled and, by means of said robot arm, connected again.

2. An implement as claimed in claim 1, characterized in that the sensor (23) is arranged inside or at the outer surface of a teat cup (2).

3. An implement as claimed in claim 1, characterized in that the sensor (24) is incorporated in the line (4) between a teat cup (2) and the milk measuring device.

4. An implement as claimed in claim 1, characterized in that the sensor is arranged inside a milk meter (3).

5. An implement as claimed in claim 1 or 2, characterized in that the signal supplied by the sensor (24) is generated immediately after a vacuum has been produced in the teat cup inner space where the teat is, or should be, located.

6. An implement as claimed in claim 5, characterized in that the sensor responds to the quantity of air or fluid which, by means of the pulsator system employed in the milking operation and constituting part of the milking plant, is introduced into the teat cup intermediate space.

## Patentansprüche

1. Gerät zum automatischen Melken eines Tieres, wie z. B. einer Kuh, das einen Melkstand (1) mit Zitzenbechern (2) und einen Roboterarm aufweist, mittels dessen die Zitzenbecher automatisch an die Zitzen des Tiereuters anzuschließen sind, sowie eine Milchmengenmeßvorrichtung mit mindestens einem Milchmengenmesser (3), über welche die von den Zitzenbechern (2) kommende Milch in einen Milchtank (6) zu leiten ist,
dadurch gekennzeichnet, daß ein Sensor (23, 24) vorgesehen ist, der beispielsweise ein Mastitis-Sensor, ein Tempera- tursensor, ein Strömungssensor, ein Milchmengenmesser oder ein sonstiger Sensor sein kann, mittels dessen nach Anschließen eines Zitzenbechers (2) an eine Zitze des Tiereuters und Erzeugen eines Vakuums im Innern des Zitzenbechers ein Signal erzeugt wird, das den Zustand des "Scheinmelkens" anzeigt, d. h. das Abknicken einer Zitze beim automatischen Anschließen eines Zitzenbechers an die Zitze; im Falle eines Scheinmelkens bewirkt dieses Signal, daß der betreffende Zitzenbecher (2) automatisch abgenommen und mittels des Roboterarmes erneut angeschlossen wird.

2. Gerät nach Anspruch 1,
dadurch gekennzeichnet, daß der Sensor (23) innerhalb oder an der Außenfläche eines Zitzenbechers (2) angeordnet ist.

3. Gerät nach Anspruch 1,
dadurch gekennzeichnet, daß der Sensor (24) in die Leitung (4) zwischen einem Zitzenbecher (2) und der Milchmengenmeßvorrichtung eingebaut ist.

4. Gerät nach Anspruch 1,
dadurch gekennzeichnet, daß der Sensor innerhalb eines Milchmengenmessers (3) angeordnet ist.

5. Gerät nach Anspruch 1 oder 2,
dadurch gekennzeichnet, daß das von dem Sensor (24) gelieferte Signal unmittelbar nach Herstellen eines Vakuums im Innern des Zitzenbechers erzeugt wird, wo sich die Zitze befindet oder befinden sollte.

6. Gerät nach Anspruch 5,
dadurch gekennzeichnet, daß der Sensor auf die Luft- oder Flüssigkeitsmenge anspricht, die mittels des Pulsiersystems, das beim Melkvorgang eingesetzt wird und Bestandteil des Melkstandes ist, in den Zwischenraum des Zitzenbechers eingeleitet wird.

## Revendications

1. Machine pour traire automatiquement un animal tel qu'une vache, laquelle machine comprend une installation de traite (1) comportant des godets de trayons (2) et un bras de robot au moyen duquel les godets de trayons peuvent être reliés automatiquement aux trayons du pis de l'animal, ainsi qu'un dispositif de mesure du lait comprenant au moins un compteur de lait (3), le lait provenant des godets de trayons (2) pouvant être transporté jusqu'à un réservoir à lait (6) par l'intermédiaire de ce dispositif de mesure du lait,
**caractérisée** en ce qu'il est prévu un capteur (23, 24) pouvant être, par exemple, un détecteur de mammite, un capteur de température, un capteur de débit, un compteur de lait ou tout autre capteur, au moyen duquel capteur, après qu'un godet de trayon (2) a été amené à un trayon du pis de l'animal et qu'un vide a été produit dans l'espace intérieur du godet de trayon, un signal est produit pour indiquer la survenue d'une "traite aveugle", c'est à dire le fait qu'un trayon a été plié pendant le branchement automatique d'un godet de trayon à ce trayon, ce signal ayant pour effet, en cas de "traite aveugle", de faire débrancher automatiquement le godet de trayon (2) en cause et de le faire brancher à nouveau au moyen dudit bras de robot.

2. Machine selon la revendication 1, caractérisée en ce que le capteur (23) est disposé à l'intérieur d'un godet de trayon ou sur la surface extérieure de celui-ci.

3. Machine selon la revendication 1, caractérisée en ce que le capteur (24) est incorporé dans le conduit (4) entre un godet de trayon (2) et le dispositif de mesure du lait.

4. Machine selon la revendication 1, caractérisée en ce que le capteur est disposé à l'intérieur d'un compteur de lait (3).

5. Machine selon la revendication 1 ou 2, caractérisée en ce que le signal fourni par le capteur (24) est émis immédiatement après qu'un vide a été produit dans l'espace intérieur du godet de trayon où le trayon est situé ou devrait être situé.

6. Machine selon la revendication 5, caractérisée en ce que le capteur répond à la quantité d'air ou de fluide qui est introduite dans l'espace intermédiaire du godet de trayon au moyen du système pulsateur utilisé dans l'opération de traite et faisant partie de l'installation de traite.
